(19) Europäisches Patentamt

European Patent Office

Office européen des brevets

(11) **EP 1 413 863 B1**

(12) **EUROPÄISCHE PATENTSCHRIFT**

| | |
|---|---|
| (45) Veröffentlichungstag und Bekanntmachung des Hinweises auf die Patenterteilung: **11.01.2006 Patentblatt 2006/02** | (51) Int Cl.: **G01L 1/02** *(2006.01)* **G01G 19/414** *(2006.01)* **B60R 21/01** *(2006.01)* **B60N 2/00** *(2006.01)* |

(21) Anmeldenummer: **03023680.6**

(22) Anmeldetag: **17.10.2003**

(54) **Erkennen einer Sitzbelegung ohne Alterung mit einem Blasenwandler durch eine Zwischenschicht**

Recognition of a seat occupancy using a bladder transducer with an intermediate layer to prevent aging of the assembly

Reconnaissance d'occupation de siège avec un capteur à vessies et une couche intermediaire pour éviter le vieillissement

| | |
|---|---|
| (84) Benannte Vertragsstaaten: **AT BE BG CH CY CZ DE DK EE ES FI FR GB GR HU IE IT LI LU MC NL PT RO SE SI SK TR** | (72) Erfinder: **Fischer, Thomas** **57482 Wenden (DE)** |
| (30) Priorität: **25.10.2002 DE 10249871** | (74) Vertreter: **Manitz, Finsterwald & Partner GbR** **Postfach 31 02 20** **80102 München (DE)** |
| (43) Veröffentlichungstag der Anmeldung: **28.04.2004 Patentblatt 2004/18** | (56) Entgegenhaltungen: **EP-A- 1 245 433** **US-A- 5 176 424** **US-A- 5 918 696** **US-A- 5 957 491** **US-A- 5 979 585** **US-B1- 6 392 166** |
| (73) Patentinhaber: **Delphi Technologies, Inc.** **Troy Michigan 48007 (US)** | |

## Beschreibung

Die Erfindung betrifft eine Vorrichtung zur Erkennung der Belegung eines Sitzes, insbesondere eines Kraftfahrzeugsitzes, mit wenigstens einer als Sitzpolster dienenden Polsterschicht und einer darunter angeordneten Sensorschicht, durch die eine bei Belegung des Sitzes auf die Polsterschicht wirkende Kraft detektierbar ist.

Grundsätzlich sind derartige Vorrichtungen bekannt. Beispielsweise kann die Sensorschicht eine mit einem Fluid gefüllte Sensormatte aufweisen, bei der die Erkennung einer Sitzbelegung durch eine Bestimmung der Erhöhung des Fluiddrucks in der Sensormatte bei Beaufschlagung der Polsterschicht mit einem Gewicht erfolgt. Für den gemessenen Druck gilt $p = |F|/A = m|g|/A$, wobei F die durch das Gewicht ausgeübte Kraft ist, das heißt das Produkt aus der Masse m des Gewichts und der Erdbeschleunigung g, und wobei A die Fläche ist, über welche die Kraft auf die Sensormatte ausgeübt wird, dass heißt die Kontaktfläche zwischen Polsterschicht und Sensormatte.

Problematisch ist bei bekannten Vorrichtungen, dass sich die Kontaktfläche A aufgrund einer Verformung der Polsterschicht an der zur Sensorschicht weisenden Seite im Laufe der Zeit vergrößert, wodurch ein zunehmend reduzierter Fluiddruck p in der Sensormatte ermittelt wird. Insbesondere eine länger andauernde oder häufige Sitzbelegung resultiert somit in einer fehlerhaften Erkennung der Sitzbelegung. Die Veränderung der Kontaktfläche A ist dabei abhängig von Faktoren, die nur schwer zu messen und zu kompensieren sind, wie beispielsweise altersbedingte Kompression oder Härteveränderung der Polsterschicht oder Feuchtigkeit in der Polsterschicht.

Eine Vorrichtung mit den Merkmalen des Oberbegriffs des Anspruchs 1 und insbesondere mit einer zwischen einer Polsterschicht und einer Sensorschicht angeordneten Zwischenschicht ist aus der US-A-5 918 696 bekannt.

Der Erfindung liegt die Aufgabe zugrunde, eine Vorrichtung der eingangs genannten Art zu schaffen, die eine dauerhaft zuverlässige Erkennung einer Sitzbelegung ermöglicht.

Zur Lösung der Aufgabe ist eine Vorrichtung mit den Merkmalen des Anspruchs 1 vorgesehen.

Die erfindungsgemäße Vorrichtung zur Erkennung der Belegung eines Sitzes, insbesondere eines Kraftfahrzeugsitzes, umfasst wenigstens eine als Sitzpolster dienende Polsterschicht, eine darunter angeordnete Sensorschicht, durch die eine bei Belegung des Sitzes auf die Polsterschicht wirkende Kraft detektierbar ist, und eine Zwischenschicht, die zwischen der Polsterschicht und der Sensorschicht angeordnet ist. Die Sensorschicht weist eine mit einem Fluid gefüllte Sensormatte auf, die eine Vielzahl von, insbesondere in einer Ebene angeordneten, blasenartigen Fluidzellen umfasst, wobei zueinander benachbarte Fluidzellen jeweils durch einen Fluidkanal miteinander verbunden sind. Eine an die Sensorschicht angrenzende Oberfläche der Zwischenschicht ist an eine zur Zwischenschicht weisende Oberfläche der Sensorschicht angepasst und insbesondere komplementär zu der Kontur der zur Zwischenschicht weisenden Oberfläche der Sensorschicht ausgebildet.

Durch die Zwischenschicht wird ein definierter Grenzbereich zwischen der Polsterschicht und der Sensormatte geschaffen, der es ermöglicht, dass die Polsterschicht und die Sensormatte über eine dauerhaft gleichbleibende Kontaktfläche miteinander in Wechselwirkung stehen. Auf diese Weise kann die Kontaktfläche A auch bei einer länger andauernden Sitzbelegung konstant gehalten werden. Dies ermöglicht eine von dem Alter der Polsterschicht, d.h. der Härte des Schaummaterials, von der Schaumkompression und von der Feuchtigkeit im Schaummaterial unabhängige Erkennung der Sitzbelegung. Somit kann eine Sitzbelegung jederzeit und insbesondere bei einer länger andauernden Belegung des Sitzes im Wesentlichen fehlerfrei erkannt werden.

Dadurch, dass die an die Sensorschicht angrenzende Oberfläche der Zwischenschicht an die zur Zwischenschicht weisende Oberfläche der Sensorschicht angepasst und insbesondere komplementär zu der Kontur der zur Zwischenschicht weisenden Oberfläche der Sensorschicht ausgebildet ist, wird erreicht, dass die Zwischenschicht insbesondere im Falle einer unebenen Oberflächenkontur der Sensorschicht überall an der Sensorschicht anliegt. Luftkammern zwischen der Sensorschicht und der Zwischenschicht sind dadurch im Wesentlichen ausgeschlossen. Die Zuverlässigkeit der Erkennung einer Sitzbelegung wird somit weiter erhöht.

Die mit dem Fluid gefüllte Sensormatte stellt ein einfaches Mittel zur Bestimmung einer auf die Polsterschicht wirkenden Kraft dar. Die Sensormatte lässt sich gut in einen Fahrzeugsitz integrieren und weist darüber hinaus eine geringe Bauhöhe auf.

Vorteilhafte Ausführungsformen sind den Unteransprüchen, der Beschreibung und der Zeichnung zu entnehmen.

So ist die Zwischenschicht bei einer vorteilhaften Ausbildung der Erfindung aus einem härteren Material als die Polsterschicht gebildet. Dadurch ist sichergestellt, dass sich die Zwischenschicht nicht wesentlich verformt, wenn die Polsterschicht bei einer Sitzbelegung auf die Zwischenschicht einwirkt. Dies trägt zum Erhalt des definierten Kontaktbereichs zwischen Polsterschicht und Sensorschicht bei, wodurch Fehler bei der Erkennung einer Sitzbelegung vermieden werden.

Nach einer weiteren Ausführungsform ist die Zwischenschicht aus einem hochdichten Schaummaterial und insbesondere aus einem Hartschaum gebildet. Eine derartige Zwischenschicht ist fester als die Polsterschicht und lässt sich dadurch nicht wesentlich durch die Polsterschicht verformen. Eine Veränderung des Kontaktbereichs zwischen Polsterschicht und Sensorschicht ist somit im Wesentlichen ausgeschlossen.

Die Zwischenschicht kann aus Polyurethan gebildet sein. Dieses Material ist wegen seiner hohen Festigkeit besonders gut für die Zwischenschicht geeignet und lässt sich darüber hinaus mit geringem wirtschaftlichem Aufwand herstellen und verarbeiten.

Die Zwischenschicht kann im Wesentlichen über ihre gesamte Fläche hinweg an der Sensorschicht anliegen. Auf diese Weise ist eine dauerhaft gleichbleibende Kontaktfläche zwischen Zwischenschicht und Sensorschicht und dadurch eine dauerhaft zuverlässige Erkennung einer Sitzbelegung gewährleistet.

Die an die Polsterschicht angrenzende Oberfläche der Zwischenschicht kann an die zur Zwischenschicht weisende Oberfläche der Polsterschicht angepasst und insbesondere plan sein. Dadurch ist eine bei Belegung des Sitzes auf die Polsterschicht wirkende Kraft besonders gleichmäßig auf die Zwischenschicht und somit auf die Sensorschicht übertragbar und das Ergebnis der Erkennung der Sitzbelegung wird weiter verbessert. Im Falle planer Oberflächen ist außerdem die Herstellung der Polsterschicht bzw. der Zwischenschicht vereinfacht.

Nachfolgend wird die Erfindung rein beispielhaft anhand einer vorteilhaften Ausführungsform und unter Bezugnahme auf die beigefügte Zeichnung beschrieben. Es zeigt:

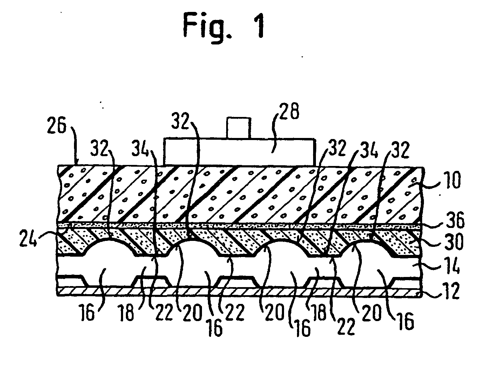

Fig. 1      einen schematischen Querschnitt durch eine vorteilhafte Ausführungsform einer erfindungsgemäßen Vorrichtung zur Erkennung einer Sitzbelegung.

Die in Fig. 1 dargestellte Vorrichtung zur Erkennung einer Kraftfahrzeugsitzbelegung weist eine als Sitzpolster für den Fahrzeugsitz dienende Polsterschicht 10 auf. Die Polsterschicht 10 ist aus einem Schaummaterial gebildet, das eine derartige Festigkeit besitzt, dass einerseits ein maximaler Sitzkomfort und andererseits eine maximale Sitzstabilität erreicht wird.

Die Polsterschicht 10 ist von einer Sitzpfanne 12 getragen, die unterhalb der Polsterschicht 10 angeordnet ist. Zwischen der Polsterschicht 10 und der Sitzpfanne 12 ist eine flexible und mit einem Fluid gefüllte Sensormatte 14 angeordnet. Die Sensormatte 14 weist eine Vielzahl von blasen- oder kugelartigen Fluidzellen 16 auf. Benachbarte Fluidzellen 16 sind jeweils durch einen Fluidkanal 18 miteinander verbunden. Eine zur Polsterschicht 10 weisende Oberfläche der Sensormatte 14 weist folglich halbkugelartige Erhebungen 20 auf, die durch ebene Bereiche 22, die durch die Fluidkanäle 18 gebildet sind, voneinander beabstandet sind.

Findet eine Belegung des Fahrzeugsitzes statt, wie es schematisch durch ein auf einer Oberseite 26 der Polsterschicht 10 angeordnetes Gewicht 28 dargestellt ist, so wird durch das Gewicht 28 über die Polsterschicht 10 eine Kraft auf die Sensormatte 14 ausgeübt, die zu einer Druckerhöhung des Fluids in der Sensormatte 14 führt. Diese Druckerhöhung ist durch geeignete, nicht gezeigte Drucksensoren messbar. Gemäß der Gleichung

$$|F| = pA$$

lässt sich aus der Fläche A, über welche die durch das Gewicht 28 erzeugte Kraft F auf die Sensormatte 14 wirkt, und aus dem Druck p des Fluids in der Sensormatte 14 die Kraft F ermitteln und somit eine Belegung des Fahrzeugsitzes erkennen.

Um eine definierte und dauerhaft gleich bleibende Fläche A zu schaffen, über die sich bei einer Sitzbelegung die Kraft F auf die Sensormatte 14 verteilt, ist eine Zwischenschicht 30 vorgesehen, die zwischen die Polsterschicht 10 und die Sensormatte 14 eingefügt ist. Die Zwischenschicht 30 ist aus einem härteren Material als die Polsterschicht 10 gebildet, vorzugsweise aus einem hochdichten Schaummaterial, wie beispielsweise Polyurethan. Die Zwischenschicht 30 weist also eine höhere Festigkeit als die Polsterschicht 10 auf.

Eine zur Polsterschicht 10 weisende Oberseite der Zwischenschicht 30 ist an eine zur Zwischenschicht 30 weisende Unterseite 24 der Polsterschicht 10 angepasst. Im dargestellten Ausführungsbeispiel sind die jeweils zueinander weisenden Oberflächen der Polsterschicht 10 und der Zwischenschicht 30 plan ausgebildet. Die Zwischenschicht 30 kann beispielsweise mittels eines Klebstoffs oder einer Klebefolie 36 an der Polsterschicht 10 befestigt sein.

Die Zwischenschicht 30 ist möglichst dünn ausgebildet, um eine möglichst geringe Erhöhung der Bauhöhe der Vorrichtung zu verursachen und somit eine kompakte Bauweise des Fahrzeugsitzes sicherzustellen.

Eine zur Sensormatte 14 weisende Unterseite der Zwischenschicht 30 ist derart ausgebildet, dass die Zwischenschicht 30 im Wesentlichen über ihre gesamte Fläche hinweg an der Sensormatte 14 anliegt. Zu diesem Zweck ist die Unterseite der Zwischenschicht 30 komplementär zu der Oberfläche der Sensormatte 14 ausgebildet, das heißt sie weist eine Matrix von halbkugelförmigen Vertiefungen 32 auf, wobei benachbarte Vertiefungen 32 jeweils durch einen ebenen Steg 34 voneinander getrennt sind. Die Vertiefungen 32 sind derart ausgebildet, dass sie durch die halbkugelartigen Erhebungen 20 der Fluidzellen im Wesentlichen ausgefüllt werden, während die ebenen Stege 34 an die ebenen Bereiche 22 der Fluidkanäle 18 angrenzen. Zwischenräume oder Luftkammern zwischen der Sensormatte 14 und der Zwischenschicht 30 sind somit weitgehend ausgeschlossen.

Wird bei einer Belegung des Fahrzeugsitzes durch das Gewicht 28 eine Kraft auf die Polsterschicht 10 ausgeübt, so wird die Kraft über die Zwischenschicht 30 auf die Sensormatte 14 übertragen. Da die Zwischenschicht 30 vergleichsweise steif ist, verteilt sich die Kraft über die gesamte Grundfläche der Zwischenschicht 30. Gleichzeitig besteht die Zwischenschicht 30 aus einem derart festen Material, dass sie sich bei Krafteinwirkung insbesondere in dem Bereich nicht verformt, in dem sie an der Sensormatte 14 anliegt. Dadurch ist die Kontaktfläche, über welche die Zwischenschicht 30 und die Sensormatte 14 miteinander in Berührung stehen, stets konstant. Folglich ist auch die Fläche A, die zur Berechnung der einwirkenden Kraft F aus der Druckerhöhung des Fluids im Inneren der Sensormatte 14 zugrunde gelegt wird, stets konstant. Unabhängig von der Alterung oder Kompression des Schaummaterials oder variierender Feuchtigkeit in dem Schaummaterial der Polsterschicht 10 ist somit dauerhaft eine zuverlässige Erkennung einer Sitzbelegung gewährleistet.

**Patentansprüche**

1. Vorrichtung zur Erkennung der Belegung eines Sitzes, insbesondere eines Kraftfahrzeugsitzes, mit wenigstens einer als Sitzpolster dienenden Polsterschicht (10), einer darunter angeordneten Sensorschicht (14), durch die eine bei Belegung des Sitzes auf die Polsterschicht (10) wirkende Kraft detektierbar ist, und einer Zwischenschicht (30), die zwischen der Polsterschicht und der Sensorschicht angeordnet ist,
   **dadurch gekennzeichnet,**
   **dass** die Sensorschicht (14) eine mit einem Fluid gefüllte Sensormatte umfasst, die eine Vielzahl von, insbesondere in einer Ebene angeordneten, blasenartigen Fluidzellen (16) aufweist, wobei zueinander benachbarte Fluidzellen (16) jeweils durch einen Fluidkanal (18) miteinander verbunden sind, und
   **dass** eine an die Sensorschicht (14) angrenzende Oberfläche der Zwischenschicht (30) an eine zur Zwischenschicht (30) weisende Oberfläche der Sensorschicht (14) angepasst und insbesondere komplementär zu der Kontur der zur Zwischenschicht (30) weisenden Oberfläche der Sensorschicht (14) ausgebildet ist.

2. Vorrichtung nach Anspruch 1,
   **dadurch gekennzeichnet,**
   **dass** die Zwischenschicht (30) aus einem härteren Material als die Polsterschicht gebildet ist.

3. Vorrichtung nach Anspruch 1 oder 2,
   **dadurch gekennzeichnet,**
   **dass** die Zwischenschicht (30) aus einem hochdichten Schaummaterial und insbesondere aus einem Hartschaum gebildet ist.

4. Vorrichtung nach einem der vorherigen Ansprüche,
   **dadurch gekennzeichnet,**
   **dass** die Zwischenschicht (30) aus Polyurethan (PUR) gebildet.ist.

5. Vorrichtung nach einem der vorherigen Ansprüche,
   **dadurch gekennzeichnet,**
   **dass** die Zwischenschicht (30) im wesentlichen über ihre gesamte Fläche hinweg an der Sensorschicht (14) anliegt.

6. Vorrichtung nach einem der vorherigen Ansprüche,
   **dadurch gekennzeichnet,**
   **dass** die an die Polsterschicht (10) angrenzende Oberfläche der Zwischenschicht (30) an die zur Zwischenschicht (30) weisende Oberfläche (24) der Polsterschicht (10) angepasst ist und insbesondere plan ist.

7. Vorrichtung nach einem der vorherigen Ansprüche,
   **dadurch gekennzeichnet,**
   **dass** die Sensorschicht (14) zwischen einer Sitzpfanne (12) und der Zwischenschicht (30) angeordnet ist.

8. Vorrichtung nach einem der vorherigen Ansprüche,
   **dadurch gekennzeichnet,**
   **dass** die Zwischenschicht (30) fest mit der Polsterschicht (10) verbunden und insbesondere verklebt ist.

**Claims**

1. Device for identifying the occupancy of a seat, in particular the seat of a vehicle, with at least one padded layer (10) serving as seat cushion, a sensor layer (14) arranged underneath it, by which a force acting on the padded layer (10) when the seat is occupied can be detected, and an intermediate layer (30) arranged between the padded layer and the sensor layer,
   **characterised in that** the sensor layer (14) comprises a sensor mat filled with a fluid, which has a multiplicity of bubble-like fluid cells (16), in particular arranged in one plane, adjacent fluid cells (16) being connected to one another in each case by a fluid channel (18), and **in that** a surface of the intermediate layer (30) bordering the sensor layer (14) is matched to a surface of the sensor layer (14) facing the intermediate layer (30) and in particular constructed as complementary to the contour of the surface of the sensor layer (14) facing the intermediate layer (30).

2. Device according to claim 1, **characterised in that** the intermediate layer (30) is made of a harder material than the padded layer.

3. Device according to claim 1 or 2, **characterised in that** the intermediate layer (30) is made of a high-density foam material and in particular of a rigid foam.

**4.** Device according to one of the preceding claims, **characterised in that** the intermediate layer (30) is made of polyurethane (PUR).

**5.** Device according to one of the preceding claims, **characterised in that** the intermediate layer (30) is substantially contiguous to the sensor layer (14) over its entire surface.

**6.** Device according to one of the preceding claims, **characterised in that** the surface of the intermediate layer (30) bordering the padded layer (10) is matched to the surface (24) of the padded layer (10) facing the intermediate layer (30) and in particular is flat.

**7.** Device according to one of the preceding claims, **characterised in that** the sensor layer (14) is arranged between a seat pan (12) and the intermediate layer (30).

**8.** Device according to one of the preceding claims, **characterised in that** the intermediate layer (30) is firmly connected and in particular glued to the padded layer (10).

**Revendications**

**1.** Dispositif de détection de l'occupation d'un siège, en particulier d'un siège de véhicule automobile, comprenant au moins une couche de rembourrage (10) servant de coussin de siège, une couche de détection (14) disposée en dessous de celle-ci, grâce à laquelle une force agissant sur la couche de rembourrage (10) en cas d'occupation du siège peut être détectée, et une couche intermédiaire (30) qui est disposée entre la couche de rembourrage et la couche de détection,
**caractérisé en ce que** la couche de détection (14) comprend un tapis détecteur rempli d'un fluide, comportant une multitude de cellules à fluide (16) en forme de bulles, disposées notamment dans un plan, des cellules à fluide (16) contiguës les unes aux autres étant reliées les unes aux autres via un canal de fluide (18), et
**en ce qu'**une surface de la couche intermédiaire (30), qui est adjacente à la couche de détection (14), est conformée à une surface de la couche de détection (14) qui est tournée vers la couche intermédiaire (30) et est notamment configurée de façon complémentaire aux contours de la surface de la couche de détection (14) qui est tournée vers la couche intermédiaire (30).

**2.** Dispositif selon la revendication 1, **caractérisé en ce que** la couche intermédiaire (30) est faite d'une matière plus dure que la couche de rembourrage.

**3.** Dispositif selon la revendication 1 ou 2, **caractérisé en ce que** la couche intermédiaire (30) est faite d'une mousse haute densité, et notamment d'une mousse rigide.

**4.** Dispositif selon l'une des revendications précédentes, **caractérisé en ce que** la couche intermédiaire (30) est faite en polyuréthanne (PUR).

**5.** Dispositif selon l'une des revendications précédentes, **caractérisé en ce que** la couche intermédiaire (30) est en contact avec la couche de détection (14) essentiellement sur toute sa surface.

**6.** Dispositif selon l'une des revendications précédentes, **caractérisé en ce que** la surface de la couche intermédiaire (30) qui est adjacente à la couche de rembourrage (10) est conformée à la surface (24) de la couche de rembourrage (10) qui est tournée vers la couche intermédiaire (30), et qu'elle est notamment plane.

**7.** Dispositif selon l'une des revendications précédentes, **caractérisé en ce que** la couche de détection (14) est placée entre une coque de siège (12) et la couche intermédiaire (30).

**8.** Dispositif selon l'une des revendications précédentes, **caractérisé en ce que** la couche intermédiaire (30) est reliée de façon fixe à la couche de rembourrage (10), et y est notamment collée.

# Fig. 1